# EUROPEAN PATENT APPLICATION

(11) **EP 2 410 622 A1**
(43) Date of publication of application: **25.01.2012**
(21) Application number: 10753411.7
(22) Date of filing: 25.02.2010
(51) Int. Cl.: H02B 13/02

(54) **INTEGRAL THREE-PHASE GAS INSULATED SWITCHGEAR**

(30) Priority: 16.03.2009 JP 2009062370
(71) Applicant: Japan AE Power Systems Corporation, Tokyo 108-0023 (JP)
(72) Inventor: INAMI, Yoshiaki, Hitachi-shi Ibaraki 316-8501 (JP); FUJISAWA, Chikara, Hitachi-shi Ibaraki 316-8501 (JP)
(74) Representative: Buchetmann, Dominik
(86) International application number: PCT/JP2010/053488
(87) International publication number: WO 2010/106916

(57) **Abstract**

Vertical type tank 1, in which vertical type interrupters 2 for three phases are arranged, has current transformer units 10 and 20. Main sections of current transformer 12 and 22 for three phases are respectively arranged in current transformer units 10 and 20 so that the lines connecting their centers form triangle. Current-carrying conductors 3 and 4 connected to vertical type interrupter 2 are made to pass through main section 12 and 22, respectively. Each of current-carrying conductors 3 and 4 is connected to first and second conductor members 31, 41 and 32, 42, which pass through the main section and connected severally and respectively by connection conductor members 33, 34, and 43, so that the current path on the primary of the current transformer form a two-turn winding. Connection conductor members 33, 34 and 43 of each phase are arranged in the space between main section 12 and 22.

## Description

### [Technical Field]

The present invention relates to a three-phase common tank type gas insulated switchgear, particularly to a three-phase common tank type gas insulated switchgear that has current transformer units in the upper location and the lower location of the side surface of its vertical type tank.

### [BACKGROUND ART]

In general, a gas insulated switchgear (hereinafter referred to as a GIS) has electrical devices such as an interrupter, a disconnecting switch, and a current transformer; and connection conductors. These components are housed in a metallic container, which is filled with insulating material like sulfur hexafluoride (SF6) gas.

The interrupter, which is the main part of an interrupter-setup arranged in the container, is used in a GIS in such a manner that one end of the interrupter is connected to a gas-insulated main bus through a current-carrying conductor and the other end thereof is connected to an insulated terminal such as a cable sealing end and a bushing through a current-carrying conductor; or in such a manner that end parts of the interrupter are severally connected to the corresponding main bus through a current-carrying conductor to form bus interlinks.

Commonly, the designing of a GIS has employed an integrated three-phase configuration for reduced floor space requirement in substations or similar installations. Moreover, the metallic container has come to use a vertical arrangement (upright configuration) in place of level arrangement (horizontal configuration) for more reduction of the floor space. Where a vertical metallic container is used, vertical type interrupters for three phases have been arranged within the container together with other relevant electrical components to compose an integrated three-phase GIS as a whole.

In addition to the above configuration, the integrated three-phase GIS having the vertical type tank uses such a structure for more downsizing that an integrated three-phase main bus is joined to one side of the vertical type tank and that current transformer units are arranged at the upper location and the lower location of the other side surface of the vertical type tank. As the integrated three-phase GIS of this sort, inventions disclosed in JP2005-261004A (Patent literature 1) and JP2008-154325A (Patent literature 2) have been known.

Each of the current transformer units installed at the upper location and the lower location of the side surface of the vertical type tank has, as described in Patent literatures 1 and 2, a cylindrical container joined to the side surface of the vertical type tank and the main section of current transformers for three phases, each of which has a ring iron core and a secondary coil, accommodated in a cylindrical container in such an arrangement that the lines connecting the centers of the main section of current transformers thereof form a triangle.

The main section of current transformer of each phase forms a through-type current transformer having such a construction that a current-carrying conductor connected to the top end of the vertical type interrupter or a current-carrying conductor connected to the bottom end of the vertical type interrupter passes through as the primary coil. Each current-carrying conductor passes through the main section of current transformer; after that, one current-carrying conductor extends toward the main bus and the other current-carrying conductor extends toward the insulated terminal or other main bus.

A technique in a gas-insulated current transformer for making the accuracy class good by increasing the product of the number of turns of the primary coil winding and the amperage of the primary current flowing through the coil, increasing the mechanical strength of the primary coil against overcurrent, and improving insulating strength, has been known as the invention described in JP05-53235U (Patent literature 3) for example.

The gas-insulated current transformer defined in Patent literature 3 uses a ring-shaped primary coil body having several turns of ring winding of the primary coil, which is molded with covering resin and the surface of which is then enveloped with a high-voltage shield. The primary coil body is fixedly supported on a mounting plate by supporting insulators placed at a regular interval. The secondary coil body has a toroidal-formed secondary winding of the secondary coil. The surface of the secondary coil body that faces the primary coil body of the ring iron core, which links with the secondary coil, is provided with a grounded shield. The secondary coil body thus formed is secured on a mounting plate.

An integrated three-phase GIS, which has a construction defined in Patent literatures 1 and 2 designed for use in a small-capacity transformation equipment for an end user, uses the through-type current transformer as its current transformer unit; needless to say therefore, the number of turns of the winding of the primary of the current transformer is only one. This configuration leads to a small current transformation ratio accompanied by a poor accuracy class. For improved electrical performance of a current transformer, it is unavoidably necessary to enlarge the size of the ring iron core, namely the main section of current transformer; this naturally causes the current transformer unit to become large in size. As a consequence of this, it encounters problem such that an integrated three-phase GIS having a current transformer unit of such construction as is described above becomes large in scale or such that the constituting an integrated three-phase GIS having a built-in current transformer becomes difficult.

To make the accuracy class of the current transformer to be built-in the GIS good, it may be practicable to increase the number of turns of winding of the primary coil as employed by the gas insulated current transformer described in Patent literature 3. This technique however has included a problem in that increasing the number of turns is not an easily-attainable aim, because the current-carrying conductor (the primary coil) of a GIS, which conveys a large current, is usually a thick cylinder.

The purpose of the present invention is to provide a three-phase common tank type gas insulated switchgear (GIS) that can be constituted without upsizing by downsizing a current transformer unit rendered by making a current-carrying conductor (the primary coil), which passes through the main section of a current transformer, to be a two-turn winding.

### [DISCLOSURE OF INVENTION]

The integrated three-phase GIS by the present invention has
a vertical type tank being filled with insulating material;
vertical type interrupters for three phases being arranged in the vertical type tank;
a main bus being connected to one side of the vertical type tank;
current transformer units being respectively provided at the upper side and the lower side of the other side surface of the vertical type tank, each of the current transformer units including main section of current transformers for three phases and a current transformer container, the main section of current transformers for three phases being arranged in the current transformer container so that the lines connecting the centers of each of the main section of current transformers form a triangle,
and each of the current-carrying conductors has a first conductor member and a second conductor member, both of which pass through the main section of current transformer, and a connection conductor member that connects between the first and the second conductor members in series to make the current path in the primary of the current transformer form a two-turn winding.
And, the connection conductor members are arranged in the space between the main sections of current transformers through which the first and the second conductor members pass.

It is preferable that the first conductor members, the second conductor members and the connection conductor members are formed of conductor segments of semicircular cross-sectional shape into one-piece, having insulating material therebetween.

It is also preferable that the first conductor members and the second conductor members form concentric arrangements including cylindrical conductor members and rod-phased conductor members having insulating material therebetween.

### [ADVANTAGES OF THE INVENTION]

Configuring an integral three-phase GIS as the present invention defines permits to make the primary of the current transformer of each of the current transformer unit be a two-turn winding easily. Therefore, the ring iron core that constitutes the main section of current transformer can be small-sized with an advantage of avoiding growth in size. Thus, it becomes easy to provide the current transformer unit at the upper location and the lower location of the side surface of one vertical type tank. Accordingly, this brings such effects that the overall scale of an integrated three-phase GIS will be reduced and thereby that the manufacturing thereof is economical.

### [BRIEF DESCRIPTION OF DRAWINGS]

Fig. 1 is a vertical cross sectional view that illustrates an embodiment of the integral three-phase GIS by the present invention.

Fig. 2(a) is a schematic vertical cross sectional diagram of an example of the upper-located current transformer provided on the vertical type tank illustrated in Fig. 1.

Fig. 2(b) is a schematic cross sectional diagram sectioned along the line A-A in Fig. 2(a).

Fig. 3 is a schematic vertical cross sectional diagram that illustrates only specific one phase in the current transformer unit illustrated in Fig. 2.

Figs. 4(a) to 4(c) are schematic cross sectional diagram sectioned respectively along lines B-B, C-C, and D-D in Fig. 3; Fig. 4(d) is a schematic cross sectional diagram sectioned along the line E-E in Fig. 4(c).

Fig. 5(a) is a schematic vertical cross sectional diagram of an example of the lower-located current transformer unit provided on the vertical type tank illustrated in Fig. 1; Fig. 5(b) is a schematic cross sectional diagram sectioned along the line A-A in Fig. 5(a).

Fig. 6 is a schematic vertical cross sectional diagram that illustrates only specific one phase in the current transformer unit illustrated in Fig. 5.

Figs. 7(a) to 7(c) are schematic cross sectional diagram sectioned respectively along lines B-B, C-C, and D-D in Fig. 6; Fig. 7(d) is a schematic cross sectional diagram sectioned along the line E-E in Fig. 7(c).

Fig. 8(a) is a schematic vertical cross.sectional diagram of an example of the upper-located current transformer unit provided on the vertical type tank illustrated in Fig. 1; Fig. 8(b) is a schematic cross sectional diagram sectioned along the line A-A in Fig. 8(a).

Fig. 9 is a schematic vertical cross sectional diagram that illustrates only specific one phase in the current transformer unit illustrated in Fig. 8.

Figs. 10(a) to 7(c) are schematic cross sectional diagram sectioned respectively along lines B-B, C-C, and D-D in Fig. 8; Fig. 10(d) is a schematic cross sectional diagram sectioned along the line E-E in Fig. 10(c).

### [BEST MODE FOR CARRYING OUT THE INVENTION]

The integrated three-phase GIS by the present invention has vertical type interrupters for three phases arranged in a vertical type tank that is to be filled with insulating material, a main bus housing being joined to one side of the vertical type tank; and a current transformer unit provided at the upper location and the lower location of the other side surface of the vertical type tank. Each of the current transformer units has main section of current transformers for three phases arrayed in a current transformer container in such a manner that the lines connecting the centers of each of the main section of current transformers form a triangle. A current-carrying conductor, which is connected to the top end or to the bottom end of the vertical type interrupter, is made to pass through each of the main section of current transformers of the current transformer units at the upper location and the lower location. Each of the current-carrying conductors includes a first conductor member and a second conductor member, both of which pass through the main section of current transformer, and a connection conductor member that connects between the first and the second conductor members in series to make the current path in the primary of the current transformer form a two-turn winding. In addition to the above, the connection conductor members are arranged in the space between the main sections of current transformers through which the first and the second conductor members pass.

### [Embodiment 1]

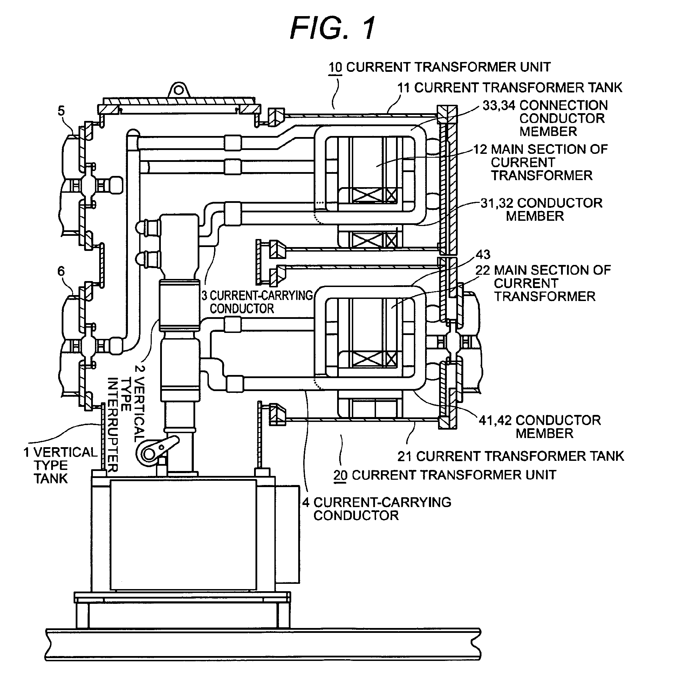

The following explains the integrated three-phase GIS by the present invention referring to Fig. 1 to Fig. 7 sequentially. In the integrated three-phase GIS illustrated in Fig. 1, vertical type interrupters 2, which makes current breaking, for three phases are arranged in rank formation in a vertical type tank 1 that is to be filled with insulating material and current carrying conductors 3 and 4 are connected respectively to the top end and the bottom end of each of vertical type interrupters 2. Similarly to conventional arts, the vertical type tank 1 has connections of main buses 5 and 6 of integral three-phase type at the upper location and the lower location of one surface thereof; an upper-located and a lower-located current transformer units 10 and 20 are provided respectively at the upper location and the lower location of the other side surface thereof.

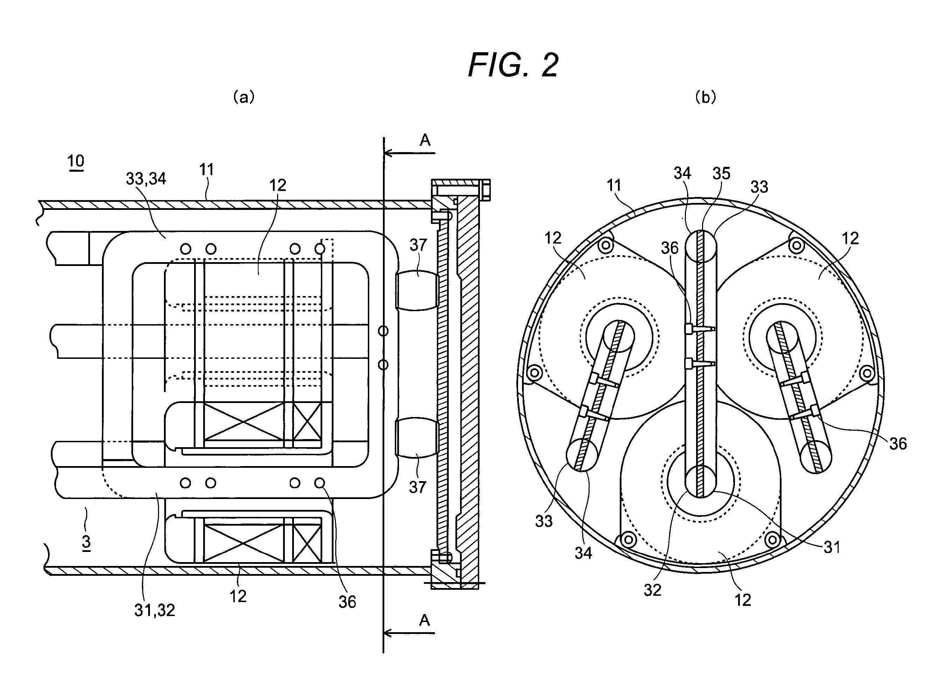

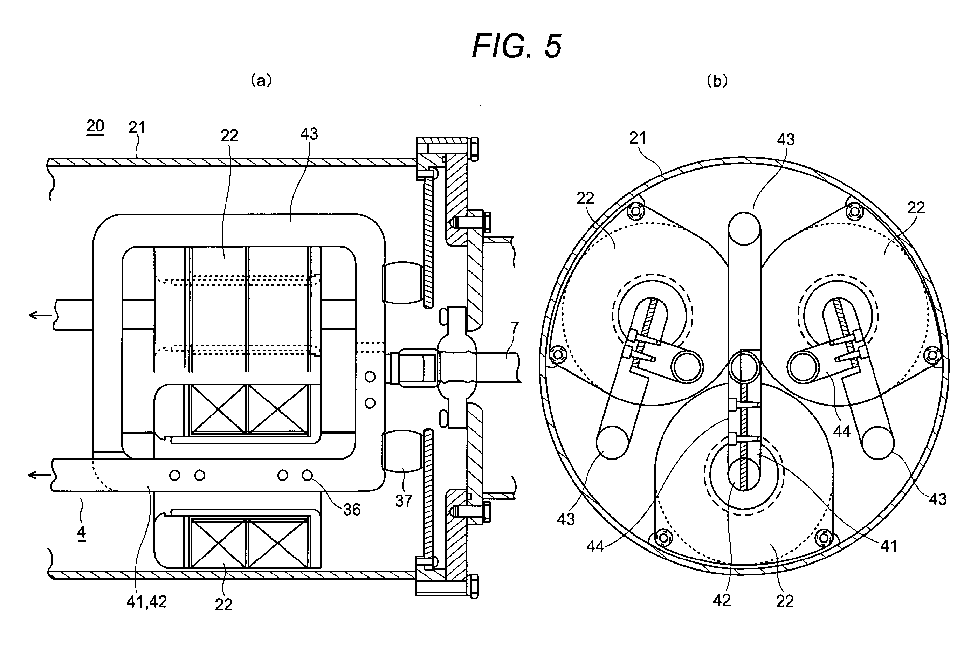

As illustrated in Figs. 2(a) and 2(b) and Figs. 5(a) and 5(b), the upper-located and the lower-located current transformer units 10 and 20 have main section of current transformers 12 and 22 for three phases including such as ring iron cores and secondary coils, which constitute the secondary of the current transformers, accommodated in current transformer containers 11 and 21 joined to the vertical type tank 1. The main section of current transformers 12 and 22 for three phases are arrayed and secured in the current transformer containers 11 and 21 in such a manner that the lines connecting the centers of each of these form a triangle, similarly to a conventional practice.

The current-carrying conductors 3 and 4, which are to be the primary coil of the current transformer, pass through each phase of the main section of current transformers 12 and 22 of the current transformer units 10 and 20, wherein the current-carrying conductors 3 and 4 are connected to the top end and the bottom end of the vertical type interrupter 2 on each of the phases and are lead out toward the current transformer containers 11 and 21.

The current-carrying conductor 3 come from the top end of the vertical type interrupter 2 forms a bend after passing through the main section of current transformer 12 and extends toward the main buses 5 and 6 being supported on the current transformer container 11 by an insulating material. Similarly, the current-carrying conductor 4 come from the bottom end of the vertical type interrupter 2 extends, after passing through the main section of current transformer 22, toward an insulated terminal such as a cable sealing end and a bushing or to other main bus. These current-carrying conductors 3 and 4 are given a special construction by the present invention in order that the current path of the primary of the current transformer that passes the main section of current transformer 12 or 22 form a two-turn winding.

The current-carrying conductor 3 of the upper-located current transformer unit has, as illustrated in Figs. 2(a) and 2(b) for example, a first conductor member 31 and a second conductor member 32 each of which passes through the main section of current transformer 12; and a connection conductor member 33 and a connection conductor member 34, which are arranged outer periphery of the main section of current transformer 12 in order to connect the first and the second conductor members 31 and 32 in series.

The connection conductor members 33 and 34 are arranged in the space between the main sections of current transformers 12 of each phase through which the first and the second conductor members 31 and 32 pass using efficiently such space, because the connection conductor members 33 and 34 are to be accommodated within a narrow space in the current transformer container 11. In Figs. 2(a) and 2(b), the connection conductor members 33 and 34, which connect to the first and the second conductor members 31 and 32 passed through the lower-located main section of one current transformer 12, are arranged in the space between two phases of main section of other current transformers 12 placed in the upper area. The connection conductor members 33 and 34 of two main sections of current transformers 12 placed in the upper area are arranged in the right and the left spaces existing between the main sections of current transformers 12 placed in the lower area.

Because the connection conductor members 33 and 34 of each of the phases are arranged as stated above, the triangle formed by the lines connecting their centers is an inverted triangle of the triangle that the main sections 12 of each phase form. This arrangement therefore uses effectively the space inside the current transformer container 11 permitting manufacturing the same without upsizing. Therefore, an integrated three-phase GIS can be manufactured economically avoiding the upsizing of its overall dimensions.

These first and second conductor members 31 and 32 use material having sufficient current-carrying capacity and ample mechanical strength like a copper solid bar for example or conductor segment with semiconductor cross-section shape prepared by splitting a hollow tube into two parts. Such conductor segments are used as an integrated component, wherein they are made to be one-piece using a securing member 36 such as a bolt with insulating washer having an insulating material 35 therebetween in order to provide durability against electromagnetic force that will appear when a heavy current flows therethrough.

The connection conductor members 33 and 34 may be formed of a conductor segment prepared in the same manner as stated above, or instead, may be formed of a current-carrying material having such a shape as will encounter no problems in providing, in the current transformer containers 11 or 21, an insulating support and the series connection between the first and the second conductor members 31 and 32 and between a first and a second conductor members 41 and 42.

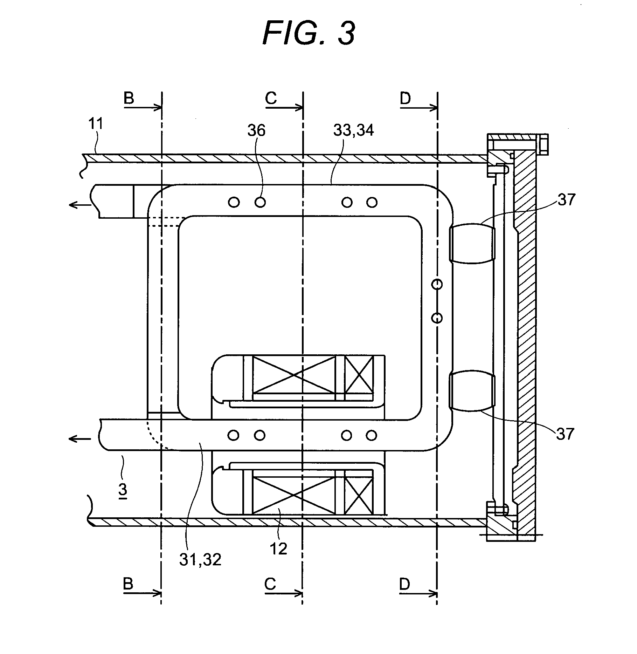

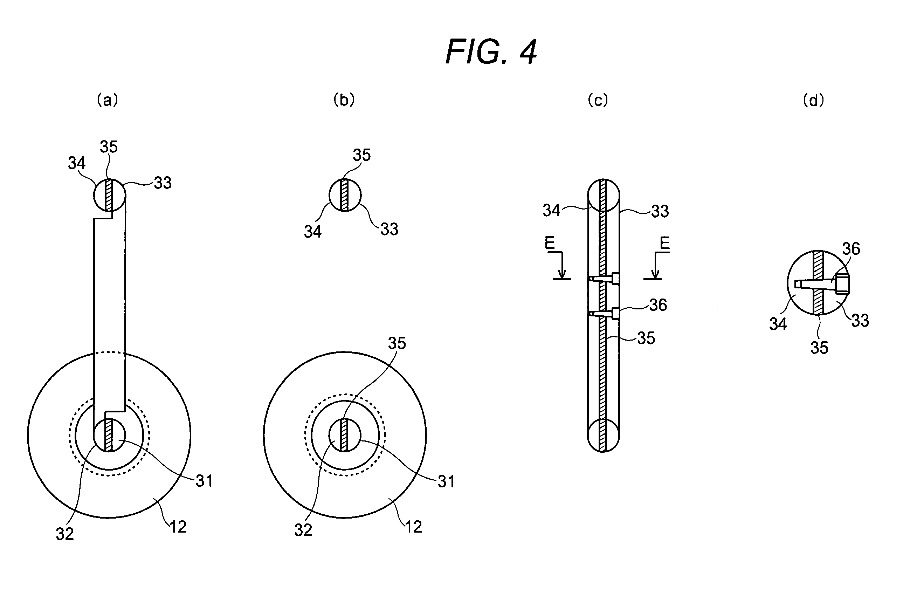

The following explains the configuration of the series connection between the first and the second conductor members 31 and 32 referring to Fig. 3 and Figs. 4(a) to 4(d) that illustrate the current transformer of a specific phase placed in the lower area of the current transformer container 11. The first conductor member 31 extending toward the vertical type interrupter 2 is connected to the connection conductor member 33 supported on the current transformer container 11 with an insulating material 37 after passing through the main section of current transformer 12. The connection conductor member 33 then turns back to connect to the second conductor member 32 passing the outer periphery of the main section of current transformer 12.

The second conductor member 32, after passing through the main section of current transformer 12, connects to the connection conductor member 34 in order to be lead toward the main buses 5 and 6. By these series connections established by the first and the second conductor members 31 and 32 and the connection conductor members 33 and 34, the current path of the primary of the current transformer is made to form a two-turn winding as a whole.

The current-carrying conductor 4 of the lower-located current transformer unit 20 is formed in a similar manner to the above-stated current-carrying conductor 3 as illustrated in, for example, Figs. 5(a) and 5(b). That is, the current-carrying conductor 4 has a first and a second conductor members 41 and 42 made to be one-piece by the securing member 36 integrating the conductor segments stated above that pass through the main section of current transformer 22 with the insulating material 35 had therebetween; and one connection conductor member 43, which connects the first and the second conductor members 41 and 42 in series, placed in the space between the main sections of current transformers 22 in a manner similar to the current transformer unit 10 stated above.

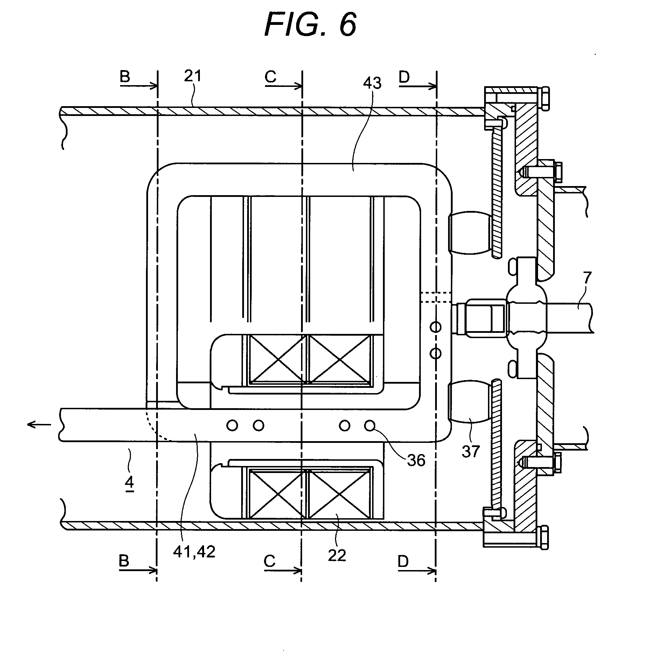

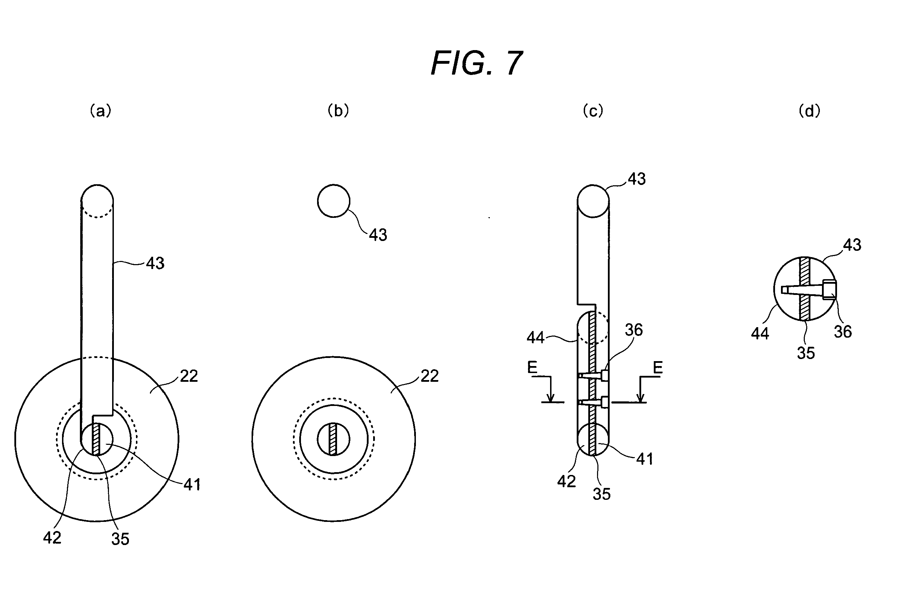

To make the current path of the primary of the current transformer to be a two-turn winding also in the current-carrying conductor 4 of the current transformer unit 20, the first and the second conductor members 41 and 42 are connected in series by the connection conductor member 43 also in the current transformer of a specific phase placed in the lower area of the current transformer container 21 illustrated in Fig. 6 and Figs. 7(a) to 7(d).

In the current transformer unit 20 illustrated in Fig. 1, each phase of the current-carrying conductors 4 come from the bottom end of the vertical type interrupter 2 has such a construction as connects to the corresponding phase of a connecting bus conductor 7 after passing through the main section of current transformer 22. Accordingly, the first conductor member 41, after passing through the main section of current transformer 22, is connected to the second conductor member 42 through the connection conductor member 43 placed between the main section of current transformers 22 in a turn-back form.

In this configuration, each of the second conductor members 42, after passing through the main section of current transformer 22, is connected to a separately provided intermediate connection conductor member 44 so that it will extend in horizontal alignment, intending thereby to ease the connection to the connecting bus conductor 7. Therefore in this connection configuration, the primary of the current transformer forms a two-turn winding as a whole although what the second conductor member 42 makes is a mere passing-through-linkage with the main section of current transformer 22.

The upper-located and the lower-located current transformer units 10 and 20 can have the primary of the current transformer of two-turn winding as stated above. Because of this configuration, the invented current transformer unit is capable of achieving downsizing compared to such a case that the upsizing of the iron core or other element is unavoidable due to application situation, wherein the primary side permits only one-turn linkage as in a current transformer having a small current transformation ratio. Accordingly, the electrical performance of the current transformer will be improved. Therefore, installing the current transformers 10 and 20 at the upper location and the lower locations of the vertical type tank 1 does not prevent the integrated three-phase GIS from being downsized but offers smaller floor space with an economical manufacturing.

In the upper-located and the lower-located current transformer units 10 and 20 stated above, each of the connection conductor members 33, 34, and 43 is arranged and routed in a manner illustrated in Fig. 2(b) and Fig. 5(b). However, where no connection interference problems occur with the main bus conductor or the connecting bus conductor 7, elements for each of the phases may be arranged, in a sequence of clockwise or counterclockwise direction, in the space between the main sections of current transformers 12, or 22.

### [Embodiment 2]

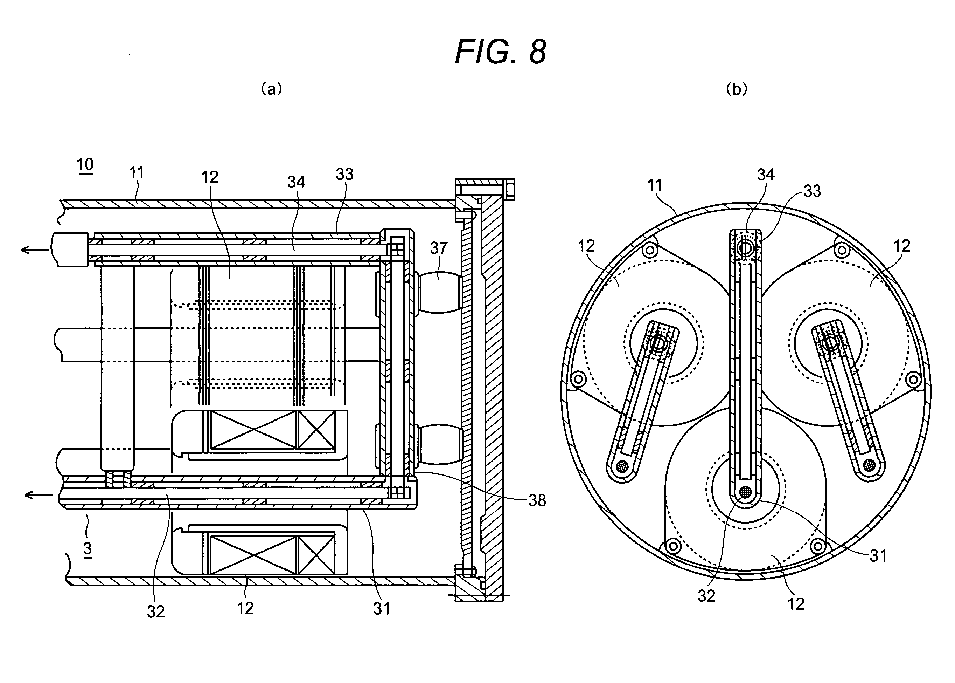

Another embodiment of the present invention is illustrated in Figs. 8 to 9 and Figs. 10(a) to 10(d), which indicates another example of constitution of the current-carrying conductor 3 of the upper-located current transformer unit 10. The current-carrying conductor 3 of each phase has the first conductor member 31 having a cylindrical shape made of a hollow tube, the second conductor member 32 of a rod-phase placed concentrically inside the first conductor member 31 having the insulating material 35, and the connection conductor members 33 and 34 arranged having the insulating material 35 in a similar manner to the above.

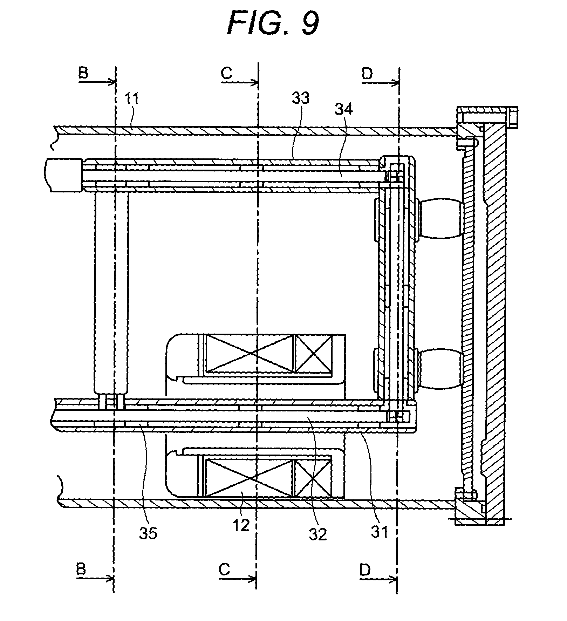

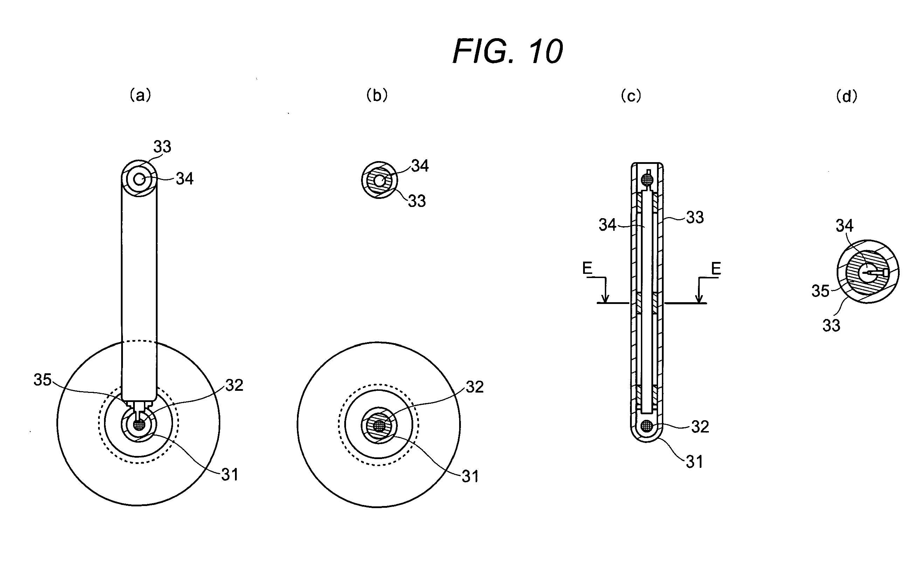

The first conductor member 31 having a cylindrical shape and the second conductor member 32 of a solid bar are connected in series, as in the above-stated embodiment illustrated in Figs. 2 and 5, by the connection conductor members 33 and 34 in a manner illustrated in Fig. 9 and Figs. 10(a) to 10(d). The first conductor member 31 having a cylindrical shape extends toward the top end of the vertical type interrupter 2 and the second conductor member 32 of a solid bar extends toward each of the main buses 5 and 6.

Each of the connection conductor members 33 and 34 has three separate components joined together for the eased configuring of the winding-around on the outer periphery of the main section of current transformer 12 permitting easy connection to the first conductor member 31 and the second conductor member 32. The connection conductor members 33 and 34 for each phase illustrated in Fig. 8 also are arranged in the space between the main sections of current transformers 12 in the turn-back style similar to the style illustrated in Fig. 2(b) and Fig. 5(b).

In this embodiment of the upper-located current transformer unit 10 too, the same effect can be produced because the current path of the primary of the current transformer can be made to form a two-turn winding similarly to the above-stated embodiment. Further, there is another advantage in that providing such configuration does not lessen the mechanical strength because concentric arrangement is applied to the first and the second conductor members 31 and to the connection conductor members 33 and 34.

### [INDUSTRIAL APPLICABILITY]

The integrated three-phase GIS by the present invention is applicable to such a construction that a current transformer unit is installed on the side of a vertical type tank inside of which vertical type interrupters for three phases are accommodated, with the primary of the current transformer made to have a two-turn winding achieving small-sizing the overall dimension. Therefore, the invention is suitable for economical manufacturing.

## Claims

1. A three-phase common tank type gas insulated switchgear comprising:
a vertical type tank being filled with insulating material;
vertical type interrupters for three phases being arranged in the vertical type tank;
a main bus being connected to one side of the vertical type tank;
current transformer units being respectively provided at the upper side and the lower side of the other side surface of the vertical type tank, each of the current transformer units including main section of current transformers for three phases and a current transformer container, the main section of current transformers for three phases being arranged in the current transformer container so that the lines connecting the centers of each of the main section of current transformers form a triangle; and
current-carrying conductors being connected to the top end or to the bottom end of the vertical type interrupter, the current-carrying conductors respectively passing through each of the main section of current transformers,
wherein each of the current-carrying conductors includes a first conductor member, a second conductor member and a connection conductor member; both of the first conductor member and the second conductor member pass through the main section of current transformers; the connection conductor member connects between the first conductor member and the second conductor member in series so that the current path in the main section of current transformer forms a two-turn winding, and
the connection conductor members are arranged in the space between the main sections of current transformers through which the first conductor member and the second conductor member pass.

2. The three-phase common tank type gas insulated switchgear according to claim 1, wherein the first conductor members, the second conductor members and the connection conductor members are formed of conductor segments with semiconductor cross-section shape and are integrated into one-piece, having insulating material therebetween.

3. The three-phase common tank type gas insulated switchgear according to claim 1, wherein the first conductor members and the second conductor members form concentric arrangements including cylindrical conductor members and a rod-phased conductor members having insulating material therebetween.
